# EUROPÄISCHE PATENTSCHRIFT

(11) **EP 1 174 537 B1**
(45) Veröffentlichungstag und Bekanntmachung des Hinweises auf die Patenterteilung: **18.08.2004**
(21) Anmeldenummer: 01114505.9
(22) Anmeldetag: 15.06.2001
(51) Int. Cl.: D06F 37/22, F16F 15/36

(54) **Einrichtung zum selbsttätigen Auswuchten**
Automatic balancing device
Dispositif d'équilibrage automatique

(30) Priorität: 19.07.2000 DE 10034952
(43) Veröffentlichungstag der Anmeldung: 23.01.2002
(73) Patentinhaber: INA-Schaeffler KG, 91074 Herzogenaurach (DE)
(72) Erfinder: Hehn, Werner, 91056 Erlangen (DE)

(56) Entgegenhaltungen:
- WO-A-98/09096
- FR-A- 1 262 528
- US-A- 3 282 127
- US-A- 4 075 909

## Beschreibung

Die Erfindung betrifft eine Einrichtung zum selbsttätigen Auswuchten eines sich drehenden Maschinenteils, bei dem innerhalb einer die Rotationsachse des Maschinenteils umgebenden, spanlos hergestellten Unwuchtausgleichsscheibe in einem ringförmigen Hohlraum freibewegliche Auswuchtmassen angeordnet sind, die die vorhandene Unwucht durch Einnahme einer Gegenlage ausgleichen.

### Hintergrund der Erfindung

Die naturgemäß mehr oder weniger immer vorhandene Unwucht eines Maschinenteils macht sich bei dessen Rotation in unangenehmer Weise bemerkbar. So ist beispielsweise bei Waschmaschinen im Schleudergang deren Bewegen im Raum bestens bekannt. Vibrationen von in der Hand aufzunehmenden Maschinen, beispielsweise Handschleifmaschinen, können im Extremfall sogar zu körperlichen Schäden des Benutzers führen.

Derartige Unwuchtprobleme löst man seit langem dadurch, dass sich Auswuchtmassen frei auf einer Kreisbahn bewegen können. Werden diese in der Nähe einer Unwucht auf einer Welle angeordnet, so streben die Auswuchtmassen automatisch Positionen an, die gegenüber der Unwucht liegen. Damit bilden sie ein Gegengewicht, durch das die Unwucht ausgeglichen wird.

Derartige Ausgleichsvorrichtungen sind beispielsweise in der DE 919 076, DE 25 48 433, DE 27 11 561 und der DE 35 09 089 beschrieben. Auch aus der US 4,075,909 ist ein solches Ausgleichssystem vorbekannt. Die in Figur 3 dieser Vorveröffentlichung gezeigte, die Kugeln aufnehmende Ausgleichsscheibe ist spanlos gefertigt. Nachteilig dabei ist, dass diese aus vielen Einzelteilen zusammengesetzt ist. Bedingt durch diese hohe Anzahl von Einzelteilen wird jedoch der Aufwand hinsichtlich Herstellung und Montage unvertretbar hoch. Darüber hinaus treten bei dieser Ausgleichsscheibe aufgrund der Vielzahl von Einzelteilen und damit der Vielzahl von vorhandenen Trennspalten Dichtungsprobleme auf, falls der Hohlraum mit einem flüssigen Dämpfungsmittel gefüllt ist.

### Zusammenfassung der Erfindung

Aufgabe der Erfindung ist es daher, eine Unwuchtausgleichsscheibe zu entwikkeln, die sich einerseits mit niedrigem Aufwand fertigen lässt und die andererseits auch dicht ist.

Erfindungsgemäß wird diese Aufgabe nach dem kennzeichnenden Teil von Anspruch 1 dadurch gelöst, dass die Unwuchtausgleichsscheibe aus einer ersten und aus einer zweiten Halbschale besteht, die zwei radial voneinander beabstandete, in axialer Richtung verlaufende Trennebenen aufweist und das die Halbschalen unlösbar miteinander verbunden sind.

Gegenüber dem bisherigen Stand der Technik lassen sich die zwei einzelnen Halbschalen der Unwuchtausgleichsscheibe ohne nennenswerten Aufwand in jeder beliebigen Form spanlos fertigen und zusammenfügen. Durch nur zwei vorhandene Trennebenen ist auch das Problem der Undichtigkeit bei Verwendung von Dämpfungsflüssigkeit mit einem geringen Aufwand lösbar.

Vorteilhafte Ausgestaltungen der Erfindung sind in den Unteransprüchen 2 bis 11 beschrieben.

Aus den Ansprüchen 2 und 3 geht die konkrete Ausbildung der beiden Halbschalen hervor. So ist nach Anspruch 2 vorgesehen, dass die erste Halbschale einen auf einer Welle befestigten ersten hülsenförmigen Abschnitt aufweist, der an einem Ende über eine Stufe in einen zweiten hülsenförmigen Abschnitt übergeht, der von einem radial verlaufenden, scheibenartigen Teil fortgesetzt ist, welches in einem dritten hülsenförmigen Abschnitt endet. Nach Anspruch 3 weist die zweite Halbschale einen ersten hülsenförmigen Abschnitt auf, der an einem Ende in einen ersten radial verlaufenden, scheibenartigen Teil übergeht, der durch einen schräg verlaufenden Abschnitt fortgesetzt ist, welcher unter einem Winkel von < 90° zur Rotationsachse verläuft, der wiederum von einem zweiten radial verlaufenden, scheibenarteigen Teil fortgesetzt ist, der in einem zweiten hülsenförmigen Abschnitt endet.

In Weiterbildung der Erfindung soll nach Anspruch 4 die erste Halbscheibe einem Härteprozess unterworfen sein. Auf diese Weise wird der Verschleiß der ersten Halbscheibe durch die Auswuchtmassen verringert. Nach einem weiteren Merkmal der Erfindung gemäß Anspruch 5 sollen die Halbschalen durch einen Bördelbord miteinander verbunden sein. Aus Anspruch 6 ist die Anordnung der Halbschalten zueinander ersichtlich. Danach soll der erste hülsenförmige Abschnitt der zweiten Halbschale den ersten hülsenförmigen Abschnitt der ersten Halbschale und der zweite hülsenförmige Abschnitt der zweiten Halbschale den dritten hülsenförmigen Abschnitt der ersten Halbschale umfassen.

Bei Verwendung von Dämpfungsmittel hat sich die Ausbildung der Unwuchtausgleichsscheibe als vorteilhaft erwiesen, wie sie aus den Ansprüchen 7 bis 9 hervorgeht. So ist nach Anspruch 7 vorgesehen, dass zwischen den Halbschalen ein Dichtmittel angeordnet ist, wobei nach Anspruch 8 zwischen dem dritten hülsenförmigen Abschnitt der ersten Halbschale und dem zweiten hülsenförmigen Abschnitt der zweiten Halbschale sowie zwischen den ersten beiden hülsenförmigen Abschnitten der Halbschalen je ein Dichtring angeordnet ist. Dabei ist weiter von Vorteil, wie aus Anspruch 9 ersichtlich, dass der dritte hülsenförmige Abschnitt der ersten Halbschale eine umlaufende Nut zur Aufnahme des Dichtringes aufweist. Dadurch kann dieser beim Montagevorgang nicht entweichen.

Nach Anspruch 10 sollen die Halbschalen von einem massiven Zwischenring aufgenommen sein. Dieser massive Zwischenring wird je nach vorliegendem Anwendungsfall ggf. zur Überbrückung von Bauraum eingesetzt. Schließlich geht aus Anspruch 11 hervor, dass im ringförmigen Hohlraum eine Dämpfungsflüssigkeit aufgenommen ist und die Auswuchtmassen als Kugeln ausgebildet sind.

Die Erfindung wird an nachstehendem Ausführungsbeispiel näher erläutert.

### Kurze Beschreibung der Zeichnungen

Es zeigen:
- Figur 1: einen Axialschnitt durch eine erfindungsgemäße Auswuchtvorrichtung,
- Figur 2: eine Seitenansicht einer Unwuchtausgleichsscheibe,
- Figur 3: einen vergrößerten axialen Halbschnitt der Unwuchtausgleichsscheibe,
- Figuren 4 bis 10: einzelne Montageschritte zur Herstellung der Unwuchtausgleichsscheibe.

### Ausführliche Beschreibung der Zeichnungen

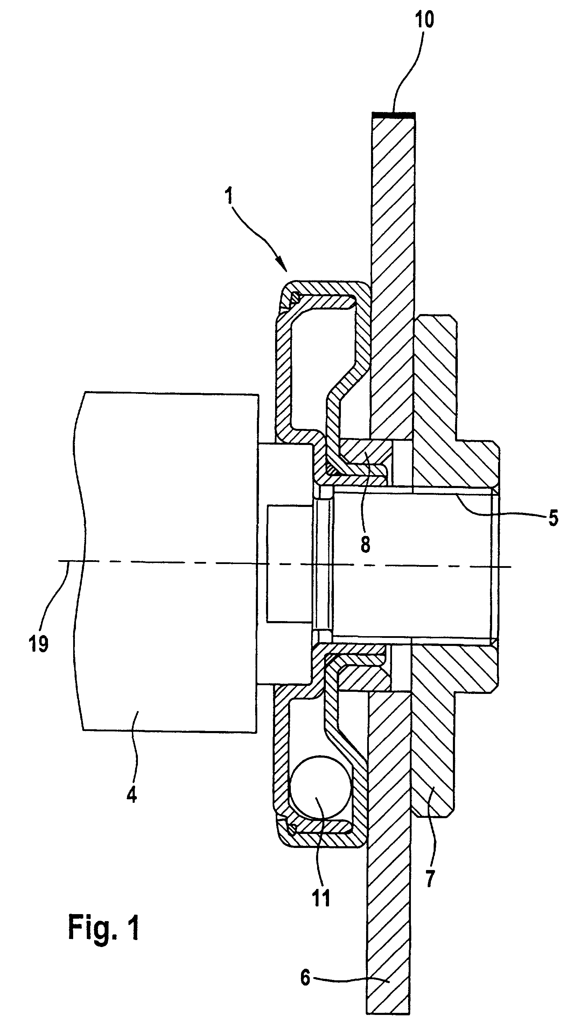

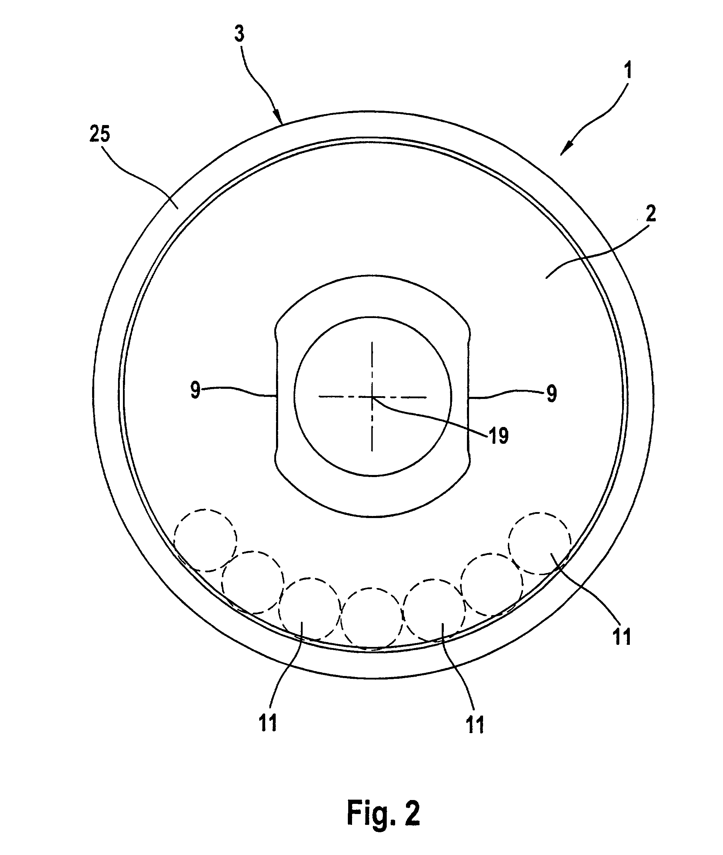

Gemäß den Figuren 1 und 2 sind auf der Schleifspindel 4, die um ihre Achse 19 rotiert, die Unwuchtausgleichsscheibe 1 und die Schleifscheibe 6 aufgenommen, deren Befestigung über das Gewinde 5 mit Hilfe der Mutter 7 realisiert ist. Zur Überbrückung des radialen Bauraumes zwischen Schleifspindel 4 und Schleifscheibe 6 weist die Anordnung den Zwischenring 8 auf, der spanend hergestellt ist. Die Unwuchtausgleichsscheibe 1 ist mit Mitnahmeflächen 9 versehen, an denen die Schleifspindel 4 anliegt. Weist nun die Schleifscheibe 6 im oberen Teil eine Unwucht 10 auf, so streben die Auswuchtkugeln 11 automatisch in eine Position, wie sie in den Figuren 1 und 2 gezeigt ist, d. h. die Kugeln 11 bewegen sich in eine Lage, die gegenüber der Unwucht 10 liegt.

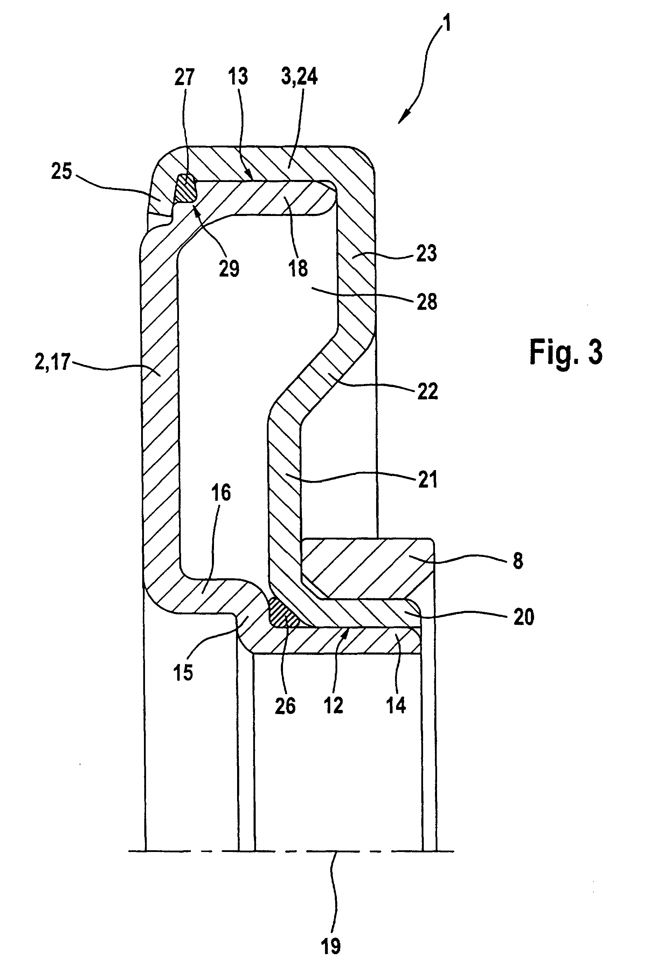

Wie die Figur 3 zeigt, besteht die Unwuchtausgleichsscheibe 1 aus der ersten Halbschale 2 und der zweiten Halbschale 3 und weist zwei Trennebenen 12 und 13 auf, die radial voneinander beabstandet sind und in axialer Richtung verlaufen. Die erste Halbschale 2 weist den ersten hülsenförmigen Abstand 14 auf, der auf der Schleifspindel 4 aufliegt. Über die Stufe 15 geht der erste hülsenförmige Abschnitt 14 in den zweiten hülsenförmigen Abschnitt 16 über, der wiederum vom scheibenartigen Teil 17 fortgesetzt ist, welcher radial nach außen verläuft und schließlich im dritten hülsenförmigen Abschnitt 18 endet, der wiederum wie die hülsenförmigen Abschnitte 14 und 16 parallel zur Rotationsachse 19 verläuft. Die zweite Halbschale 3 weist den ersten hülsenförmigen Abschnitt 20 auf, der in den radial nach außen zeigenden, scheibenartigen Teil 21 übergeht, der wiederum vom Abschnitt 22 fortgesetzt ist, der unter einem Winkel geneigt zur Rotationsachse 19 verläuft. Der Teil 22 wird vom scheibenartigen Teil 23 fortgesetzt, der radial nach außen verläuft und schließlich im zweiten hülsenförmigen Abschnitt 24 endet, der wiederum wie Abschnitt 20 parallel zur Rotationsachse 19 verläuft, allerdings in entgegengesetzter axialer Richtung.

Wie die Figuren 1 und 3 auch zeigen, sind die erste Halbschale 2 und die zweite Halbschale 3 so einander zugeordnet, dass der erste hülsenförmige Abschnitt 14 der ersten Halbschale 2 den ersten hülsenförmigen Abschnitt 20 der zweiten Halbschale 3 und der dritte hülsenförmige Abschnitt 18 der ersten Halbschale 2 den zweiten hülsenförmigen Abschnitt 24 der zweiten Halbschale 3 jeweils mit ihrer äußeren Mantelfläche aufnehmen. Der Zusammenhalt von erster Halbschale 2 und zweiter Halbschale 3 ist durch den Bördelbord 25 realisiert, der die erste Halbschale 2 umfasst. Auf diese Weise ist ein ringförmiger Hohlraum 28 gebildet, in dem die Auswuchtkugeln 11 aufgenommen sind. Dieser Hohlraum 28 nimmt in radialer Richtung betrachtet von innen nach außen durch den schräg verlaufenden Abschnitt 22 bedingt in seiner axialen Ausdehnung zu. Das hat bei der Montage der Unwuchtausgleichsscheibe 1 den Vorteil, das Dämpfungsmittel in Form von Öl nicht ohne weiteres verloren gehen kann, da es in dieser Vertiefung des ringförmigen Hohlraumes sicher gehalten ist. Ein weiterer Vorteil ist dadurch begründet, dass die Auswuchtkugeln 11 auch in radialer Richtung durch die Verengung dieses ringförmigen Hohlraumes 28 sicher geführt sind.

Die Figuren 1 und 3 zeigen weiter, dass die Dichtheit der Unwuchtausgleichsscheibe 1 nach außen durch die beiden Dichtringe 26 und 27 in Form von 0-Ringen realisiert ist. Diese sind zwischen erster und zweiter Halbschale 2, 3 angeordnet. Der erste O-Ring 26 ist zwischen der Stufe 15 der ersten Halbschale 2 und im Übergangsbereich zwischen dem ersten hülsenförmigen Abschnitt 20 und dem scheibenartigen Teil 21 der zweiten Halbschale 3 angeordnet. Der zweite O-Ring 27 wird vom Bördelbord 25 der zweiten Halbschale 3 gegen den dritten hülsenförmigen Abschnitt 18 der ersten Halbschale 2 gepresst. Dabei hat es sich als vorteilhaft erwiesen, wenn die erste Halbschale 2 im Bereich des dritten hülsenförmigen Abschnitts 18 mit einer umlaufenden Nut 29 versehen ist, so dass der O-Ring 27 vor dem Bördeln leicht zwischen die Nut 29 und dem noch nicht umgelegten Bördelbord 25 eingepresst werden kann.

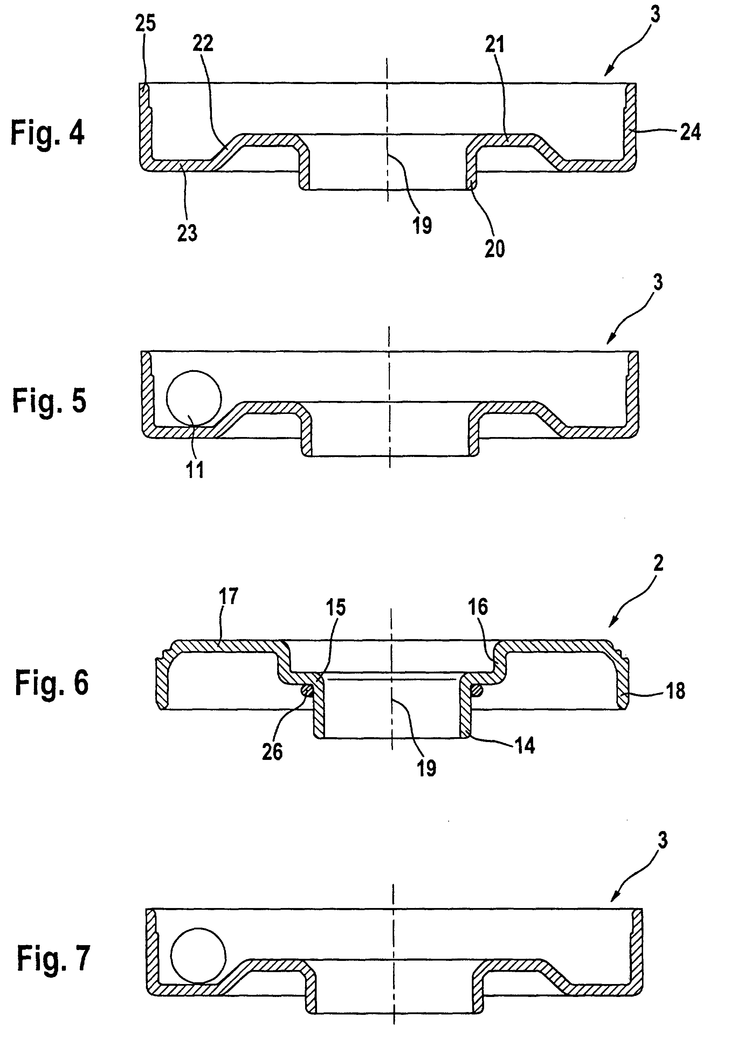

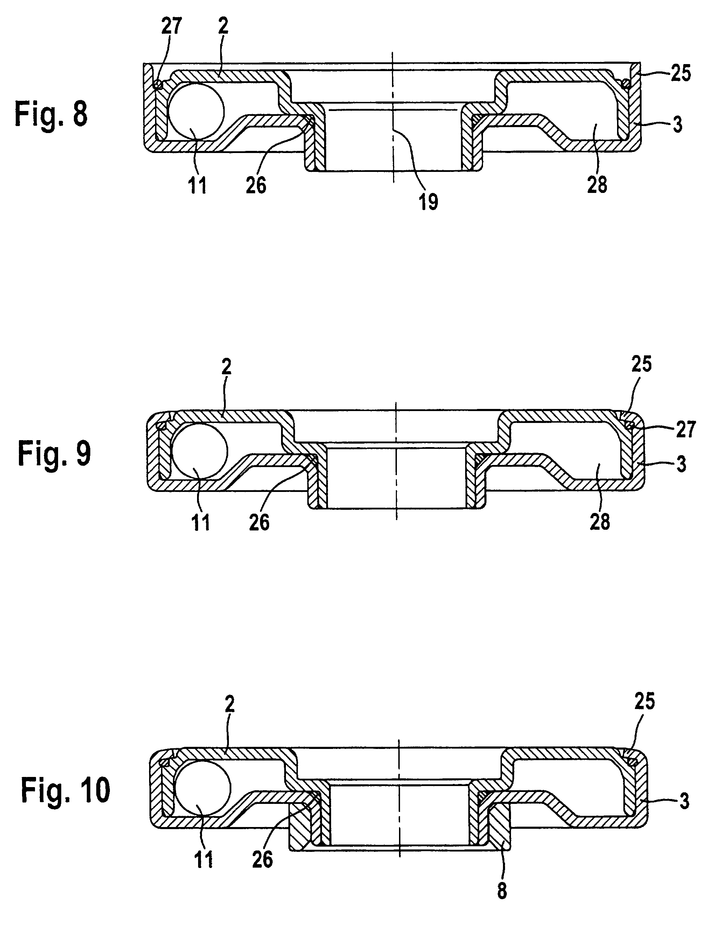

Der Montagevorgang der Unwuchtausgleichsscheibe 1 aus den beiden Halbschalen 2 und 3 ist den Figuren 4 bis 10 entnehmbar. Zunächst ist in Figur 4 die zweite Halbschale 3 mit ihren Teilen erster hülsenförmiger Abschnitt 20, scheibenartiger Teil 21, Abschnitt 22, zweiter scheibenartiger Teil 23 und zweiter hülsenförmiger Abschnitt 24 sowie Bördelbord 25 nochmals gezeigt. Gemäß Figur 5 wird in die zweite Halbschale 3 eine bestimmte Anzahl von Auswuchtkugeln 11, sowie erforderlich, Dämpfungsmittel eingefüllt. In Figur 6 ist die erste Halbschale 2 mit ihren Einzelbestandteilen erster hülsenförmiger Abschnitt 14, Stufe 15, zweiter hülsenförmiger Abschnitt 16, scheibenartiger Teil 17 und dritter hülsenförmiger Abschnitt 18 gezeigt, wobei sie mit dem O-Ring 26 versehen ist, der auf den ersten hülsenförmigen Abschnitt 14 aufgeschoben ist. Diese erste Halbschale 2 wird nun in die zweite Halbschale 3 gemäß Figur 7 eingeschoben, so dass gemäß Figur 8 der ringförmige Hohlraum 28 gebildet ist. Danach wird der zweite O-Ring 27 eingelegt und der Bördelbord 25 umgelegt, wie aus Figur 9 ersichtlich. Nach Aufpressen des Zwischenringes 8 ist die komplette Unwuchtausgleichsscheibe 1 hergestellt, die in Figur 10 gezeigt ist.

### Bezugszeichen

- 1: Unwuchtausgleichsscheibe
- 2: erste Halbschale
- 3: zweite Halbschale
- 4: Schleifspindel
- 5: Gewinde
- 6: Schleifscheibe
- 7: Befestigungsmutter
- 8: Zwischenring
- 9: Mitnahmefläche
- 10: Unwucht
- 11: Auswuchtkugel
- 12: Trennebene
- 13: Trennebene
- 14: erster hülsenförmiger Abschnitt von 2
- 15: Stufe von 2
- 16: zweiter hülsenförmiger Abschnitt von 2
- 17: scheibenartiger Teil von 2
- 18: dritter hülsenförmiger Abschnitt von 2
- 19: Rotationsachse
- 20: erster hülsenförmiger Abschnitt von 3
- 21: erster scheibenartiger Teil von 3
- 22: Abschnitt von 3
- 23: zweiter scheibenartiger Teil von 3
- 24: zweiter hülsenförmiger Abschnitt von 3
- 25: Bördelbord
- 26: Dichtring
- 27: Dichtring
- 28: ringförmiger Hohlraum
- 29: umlaufende Nut

## Patentansprüche

1. Einrichtung zum selbsttätigen Auswuchten eines sich drehenden Maschinenteils (6), bei dem innerhalb einer die Rotationsachse (19) des Maschinenteils (6) umgebenden, spanlos hergestellten Unwuchtausgleichscheibe (1) in einem ringförmigen Hohlraum (28) frei bewegliche Auswuchtmassen (11) angeordnet sind, die die vorhandene Unwucht (10) durch Einnahme einer Gegenlage ausgleichen, **dadurch gekennzeichnet, dass** die Unwuchtausgleichsscheibe (1) aus einer ersten und aus einer zweiten Halbschale (2, 3) besteht, die zwei radial voneinander beabstandete, in axialer Richtung verlaufende Trennebenen (12, 13) aufweist und dass die Halbschalen (2, 3) unlösbar miteinander verbunden sind.

2. Einrichtung nach Anspruch 1, **dadurch gekennzeichnet, dass** die erste Halbschale (2) einen auf einer Welle (4) befestigten ersten hülsenförmigen Abschnitt (14) aufweist, der an einem Ende über eine Stufe (15) in einen zweiten hülsenförmigen Abschnitt (16) übergeht, der von einem radial verlaufenden, scheibenartigen Teil (17) fortgesetzt ist, welches in einem dritten hülsenförmigen Abschnitt (18) endet.

3. Einrichtung nach Anspruch 1, **dadurch gekennzeichnet, dass** die zweite Halbschale (3) einen ersten hülsenförmigen Abschnitt (20) aufweist, der an einem Ende in einen ersten radial verlaufenden, scheibenartigen Teil (21) übergeht, der durch einen schräg verlaufenden Abschnitt (22) fortgesetzt ist, welcher unter einem Winkel von < 90° zur Rotationsachse (19) verläuft, der wiederum von einem zweiten radial verlaufenden, scheibenartigen Teil (23) fortgesetzt ist, der in einem zweiten hülsenförmigen Abschnitt (24) endet.

4. Einrichtung nach Anspruch 2, **dadurch gekennzeichnet, dass** die erste Halbschale (2) einem Härteprozess unterworfen ist.

5. Einrichtung nach Anspruch 1, **dadurch gekennzeichnet, dass** die Halbschalen (2, 3) durch einen Bördelbord (25) miteinander verbunden sind.

6. Einrichtung nach den Ansprüchen 2 und 3, **dadurch gekennzeichnet, dass** der erste hülsenförmige Abschnitt (20) der zweiten Halbschale (3) den ersten hülsenförmigen Abschnitt (14) der ersten Halbschale (2) und der zweite hülsenförmige Abschnitt (24) der zweiten Halbschale (3) den dritten hülsenförmigen Abschnitt (18) der ersten Halbschale (2) umfasst.

7. Einrichtung nach Anspruch 1, **dadurch gekennzeichnet, dass** zwischen den Halbschalen (2, 3) ein Dichtmittel angeordnet ist.

8. Einrichtung nach Anspruch 7, **dadurch gekennzeichnet, dass** zwischen dem dritten hülsenförmigen Abschnitt (18) der ersten Halbschale (2) und dem zweiten hülsenförmigen Abschnitt (24) der zweiten Halbschale (3) sowie zwischen den beiden ersten hülsenförmigen Abschnitten (14, 20) der Halbschalen (2, 3) je ein Dichtring (26, 27) angeordnet ist.

9. Einrichtung nach Anspruch 2, **dadurch gekennzeichnet, dass** der dritte hülsenförmige Abschnitt (18) der ersten Halbschale (2) eine umlaufende Nut (29) zur Aufnahme des Dichtringes (27) aufweist.

10. Einrichtung nach Anspruch 1, **dadurch gekennzeichnet, dass** die Halbschalen (2,3) von einem Zwischenring (6) aufgenommen sind.

11. Einrichtung nach Anspruch 1, **dadurch gekennzeichnet, dass** im ringförmigen Hohlraum (28) eine Dämpfungsflüssigkeit aufgenommen ist und die Auswuchtmassen als Kugeln (11) ausgebildet sind.

## Claims

1. Device for automatically balancing a rotating machine component (6) in which freely movable balancing masses (11), that compensate for the existing imbalance (10) by moving into an opposed position, are arranged in a hollow annular space (28) within a balance-error compensation disk (1) that is made without chip removal and surrounds the axis of rotation (19) of the machine component (6), **characterised in that** the balance-error compensation disk (1) consists of a first and a second semi-shell (2, 3) that comprise two radially spaced parting planes (12, 13) extending in axial direction, and that the semi-shells (2, 3) are inseparably connected to each other.

2. Device according to claim 1, **characterised in that** the first semi-shell (2) comprises a first bush-shaped section (14) that is fixed on a shaft (4), and merges at one end through a step (15) into a second bush-shaped section (16) that is continued by a radially extending disk-like part (17) that ends in a third bush-shaped section (18).

3. Device according to claim 1, **characterised in that** the second semi-shell (3) comprises a first bush-shaped section (20) that merges at one end into a first radially extending disk-like part (21) that is continued by an inclined section (22) having an angle of inclination of < 90° to the axis of rotation (19), said inclined section (22) merging, in its turn, into a second radially extending disk-like part (23) that ends in a second bush-shaped section (24).

4. Device according to claim 2, **characterised in that** the first semi-shell (2) is subjected to a hardening treatment.

5. Device according to claim 1, **characterised in that** the semi-shells (2, 3) are connected to each other by a bent-over rim (25).

6. Device according to claims 2 and 3, **characterised in that** the first bush-shaped section (20) of the second semi-shell (3) surrounds the first bush-shaped section (14) of the first semi-shell (2), and the second bush-shaped section (24) of the second semi-shell (3) surrounds the third bush-shaped section (18) of the first semi-shell (2).

7. Device according to claim 1, **characterised in that** a sealing means is arranged between the semi-shells (2, 3).

8. Device according to claim 7, **characterised in that** a sealing ring (26, 27) is arranged between the third bush-shaped section (18) of the first semi-shell (2) and the second bush-shaped section (24) of the second semi-shell (3), and also between the two first bush-shaped sections (14, 20) of the semi-shells (2, 3).

9. Device according to claim 2, **characterised in that** the third bush-shaped section (18) of the first semi-shell (2) comprises a circumferential groove (29) for receiving the sealing ring (27).

10. Device according to claim 1, **characterised in that** the semi-shells (2, 3) are received by an intermediate ring (6).

11. Device according to claim 1, **characterised in that** a damping liquid is received in the hollow annular space (28), and the balancing masses are configured as balls (11).

## Revendications

1. Dispositif d'équilibrage automatique d'un composant (6) de machine tournant dans lequel des masses d'équilibrage (11) à mouvement libre, qui compensent le déséquilibre (10) existant par déplacement dans une position opposée, sont agencées dans un espace annulaire vide (28) d'un disque de compensation de déséquilibre (1) qui est fabriqué sans enlèvement de copeaux et qui entoure l'axe de rotation (19) du composant (6) de machine, **caractérisé en ce que** le disque de compensation de déséquilibre (1) comporte une première et une seconde demi-coque (2, 3) et comprend deux plans de séparation (12, 13) qui sont radialement écartés, l'un de l'autre, et qui s'étendent en direction axiale, et **en ce que** les demi-coques (2, 3) sont reliées, l'une à l'autre, de manière non détachable.

2. Dispositif selon la revendication 1, **caractérisé en ce que** la première demi-coque (2) comprend une première section (14) en forme de douille qui est fixée sur un arbre (4) et qui se raccorde par un gradin (15) à l'une de ses extrémités, à une seconde section (16) en forme de douille qui se prolonge par une partie (17) en forme de disque qui s'étend en direction radiale en terminant en une troisième section (18) en forme de douille.

3. Dispositif selon la revendication 1, **caractérisé en ce que** la seconde demi-coque (3) comprend une première section (20) en forme de douille qui se raccorde, à l'une de ses extrémités, à une première partie (21) en forme de disque qui s'étend en direction radiale et se prolonge par une section (22) en biais qui s'étend avec un angle de < 90° à l'axe de rotation (19) et qui, à son tour, se prolonge par une seconde partie (23) en forme de disque qui s'étend en direction radiale en terminant en une seconde section (24) en forme de douille.

4. Dispositif selon la revendication 2, **caractérisé en ce que** la première demi-coque (2) est soumise à un processus de durcissement.

5. Dispositif selon la revendication 1, **caractérisé en ce que** les demi-coques (2, 3) sont reliées, l'une à l'autre, par un bord rabattu (25).

6. Dispositif selon les revendications 2 et 3, **caractérisé en ce que** la première section (20) en forme de douille de la seconde demi-coque (3) entoure la première section (14) en forme de douille de la première demi-coque (2), et la seconde section (24) en forme de douille de la seconde demi-coque (3) entoure la troisième section (18) en forme de douille de la première demi-coque (2).

7. Dispositif selon la revendication 1, **caractérisé en ce qu'**un moyen d'étanchéité est agencé entre les demi-coques (2, 3).

8. Dispositif selon la revendication 7, **caractérisé en ce qu'**une bague d'étanchéité (26, 27) est agencée entre la troisième section (18) en forme de douille de la première demi-coque (2) et la seconde section (24) en forme de douille de la seconde demi-coque (3), et également entre les deux premières sections (14, 20) en forme de douille des demi-coques (2, 3).

9. Dispositif selon la revendication 2, **caractérisé en ce que** la troisième section (18) en forme de douille de la première demi-coque (2) comprend une rainure circonférentielle (29) pour recevoir la bague d'étanchéité (27).

10. Dispositif selon la revendication 1, **caractérisé en ce que** les demi-coques (2, 3) sont reçues par un anneau intermédiaire (6).

11. Dispositif selon la revendication 1, **caractérisé en ce qu'**un liquide d'amortissement est reçu dans l'espace annulaire vide (28), et les masses d'équilibrage sont configurées sous la forme de billes (11).
